# EUROPÄISCHE PATENTANMELDUNG

(11) **EP 2 189 746 A1**
(43) Veröffentlichungstag der Anmeldung: **26.05.2010**
(21) Anmeldenummer: 08291105.8
(22) Anmeldetag: 24.11.2008
(51) Int. Cl.: F28F 9/00, B60K 11/04

(54) **Halteteil zur Befestigung eines Wärmeübertragers**

(71) Anmelder: Behr GmbH & Co. KG, 70469 Stuttgart (DE); Behr France Hambach S.A.R.L., 57912 Hambach (FR)
(72) Erfinder: Roehm, Klaus, 71394 Kernen i. R. (DE); Herbeth, Michel, 57730 Macheren (FR); Bellot, Frédéric, 67260 Insigen (FR)
(74) Vertreter: Grauel, Andreas

(57) **Zusammenfassung**

Halteteil (1) zur Befestigung eines Wärmeübertragers (14) oder eines Wärmeübertragermoduls an einer Karosserie eines Kraftfahrzeuges, umfassend ein Auflagemaul (2) zum Auflegen auf einen Eckbereich des Wärmeübertragers (14) oder Wärmeübertragermoduls und formschlüssigen Verbinden des Halteteils (1) mit dem Wärmeübertrager (14) oder Wärmeübertragermodul, wobei vorzugsweise von dem Auflagemaul (2) in wenigstens einer Richtung keine formschlüssige Verbindung zwischen dem Halteteil (1) und dem Eckbereich herstellbar ist, wenigstens ein Mittel (3) zum zusätzlichen Verbinden des Halteteils (1) mit dem Eckbereich des Wärmeübertragers (14) oder des Wärmeübertragermoduls, wenigstens eine Einrichtung (4) zum Verbinden des Halteteils (1) mit der Karosserie des Kraftfahrzeuges, wobei das wenigstens eine Mittel (3) wenigstens ein biegbarer Haltearm (5) oder Halteclip zum form- und/oder kraftschlüssigen Befestigen des Wärmeübertragers (14) oder des Wärmeübertragermoduls an dem Halteteil (1) ist, so dass mittels eines Biegens des wenigstens einen Haltearmes (5) oder Halteclips der Wärmeübertrager (14) oder das Wärmeübertragermodul an dem Halteteil (1) befestigbar ist und/oder das Auflagemaul (2) elastisch ist und mittels einer Verformung des Auflagemaules (2) eine kraftschlüssigen Klemmverbindung zwischen dem Auflagemaul (2) und dem Eckbereich (2) herstellbar ist und/oder das Halteteil (1), insbesondere das Auflagemaul (2), mit einer Ausnehmung versehen ist, um mittels einer Verformung des Wärmeübertragers (14) oder des Wärmeübertragermoduls in die Ausnehmung eine form- und/oder kraftschlüssige Verbindung zwischen der Ausnehmung und dem Wärmeübertrager (14) oder dem Wärmeübertragermodul herzustellen.

## Beschreibung

Die Erfindung betrifft eine Halteteil gemäß dem Oberbegriff des Anspruches 1 und ein Kraftfahrzeug und eine Kraftfahrzeugklimaanlage. Ferner betrifft die Erfindung ein Verfahren zur Befestigung zur Befestigung eines Wärmeübertragers oder eines Wärmeübertragermoduls an einer Karosserie eines Kraftfahrzeuges gemäß dem Oberbegriff des Anspruches 13.

Kraftfahrzeugklimaanlagen werden in Kraftfahrzeugen eingesetzt, um die den Innenraum des Kraftfahrzeuges zuzuführenden Luft zu erwärmen und/oder zu kühlen. Die Kraftfahrzeugklimaanlage umfasst einen Kältemittelverdampfer, einen Kondensator und einen Verdichter. Die von dem Kältemittelverdampfer abgegebene Wärme wird von dem Kondensator als Wärmeübertrager an die Umgebungsluft abgegeben.

In Kraftfahrzeugen müssen Wärmeübertrager, z. B. ein Kondensator, durch den das Kältemittel der Kraftfahrzeugklimaanlage strömt, einer Kraftfahrzeugklimaanlage, ein Kühlflüssigkeitskühler für die Kühlflüssigkeit eines Verbrennungsmotors oder ein Ölkühler an der Karosserie befestigt werden. Es können dabei auch mehrere Wärmeübertrager, z. B. der Kondensator und der Kühlflüssigkeitskühler, zu einem Wärmeübertragermodul zusammengefasst sein, d. h. der Kondensator und der Kühlflüssigkeitskühler sind miteinander verbunden. Auch dieses Wärmeübertragermodul ist an der Karosserie des Kraftfahrzeuges zu befestigen. Hierzu werden im Allgemeinen Halteteile aus Metall, insbesondere Aluminium, eingesetzt. Das Halteteil wird dabei an dem Wärmeübertrager oder dem Wärmeübertragermodul befestigt, z. B. durch Löten. Anschließend wird das Halteteil an der Karosserie, beispielsweise mittels einer Schraub- oder Steckverbindung, befestigt. Hierzu weist das Halteteil beispielsweise eine Lasche mit einer Ausnehmung auf. Mittels der Ausnehmung wird das Halteteil anschließend an der Karosserie fixiert. In nachteiliger Weise sind die Halteteile aus Aluminium in der Herstellung teuer und das Befestigen des Halteteils an dem Wärmeübertrager oder dem Wärmeübertragermodul mittels Anlöten kann eine fehlerhafte Befestigung des Halteteils an dem Wärmeübertrager oder dem Wärmeübertragermodul verursachen.

Die US 5 535 819 zeigt einen Wärmeübertrager mit einer Befestigungsklammer zum Befestigen des Wärmeübertragers an einer Karosserie eines Kraftfahrzeuges. Die Befestigungsklammer wird mittels Löten oder einer Schraube an dem Wärmeübertrager befestigt.

Aus der US 7 040 380 B1 ist ein gattungsbildendes Halteteil bekannt. Ein Halteteil mit einem Auflagemaul ist auf einen Eckbereich eines Wärmeüberträgers aufzulegen. Das Auflagemaul wird zusätzlich mit einer Niete und biegbaren Laschen an dem Auflagemaul an dem Eckbereich befestigt. In nachteiliger Weise ist damit das Halteteil aufwendig an dem Wärmeübertrager zu befestigen.

Die EP 1 297 979 A2 zeigt ein gattungsgemäßes Halteteil. Ein Auflagemaul des Halteteils ist auf einen Eckbereich eines Wärmeübertragers aufzulegen und mittels eines Dornes zusätzlich mit dem Eckbereich verrastet. Eine sichere und zuverlässige Befestigung des Halteteils an dem Eckbereich ist damit nicht gewährleistet.

Die Aufgabe der vorliegenden Erfindung besteht deshalb darin, ein Halteteil, eine Kraftfahrzeugklimaanlage und ein Kraftfahrzeug sowie ein Verfahren zur Befestigung eines Wärmeübertragers zur Verfügung zu stellen, das auf eine einfache und zuverlässige Art und Weise eine Befestigung des Wärmeübertragers an dem Kraftfahrzeug ermöglicht. Ferner sollen das Halteteil, die Kraftfahrzeugklimaanlage und das Kraftfahrzeug in der Herstellung preiswert sein.

Diese Aufgabe wird gelöst mit einem Halteteil zur Befestigung eines Wärmeübertragers oder eines Wärmeübertragermoduls an einer Karosserie eines Kraftfahrzeuges, umfassend ein Auflagemaul zum Auflegen auf einen Eckbereich des Wärmeübertragers oder Wärmeübertragermoduls und formschlüssigen Verbinden des Halteteils mit dem Wärmeübertrager oder Wärmeübertragermodul, wobei vorzugsweise von dem Auflagemaul in wenigstens einer Richtung keine formschlüssige Verbindung zwischen dem Halteteil und dem Eckbereich herstellbar ist, wenigstens ein Mittel zum zusätzlichen Verbinden des Halteteils mit dem Eckbereich des Wärmeübertragers oder des Wärmeübertragermoduls, wenigstens eine Einrichtung zum Verbinden des Halteteils mit der Karosserie des Kraftfahrzeuges, wobei das wenigstens eine Mittel wenigstens ein biegbarer Haltearm oder Halteclip zum form- und/oder kraftschlüssigen Befestigen des Wärmeübertragers oder des Wärmeübertragermoduls an dem Halteteil ist, so dass mittels eines Biegens des wenigstens einen Haltearmes oder Halteclips der Wärmeübertrager oder das Wärmeübertragermodul an dem Halteteil befestigbar ist und/oder das Auflagemaul elastisch ist und mittels einer Verformung des Auflagemaules eine kraftschlüssigen Klemmverbindung zwischen dem Auflagemaul und dem Eckbereich herstellbar ist und/oder das Halteteil, insbesondere das Auflagemaul, mit einer Ausnehmung versehen ist, um mittels einer Verformung des Wärmeübertragers oder des Wärmeüberfiragermoduls in die Ausnehmung eine form- und/oder kraftschlüssige Verbindung zwischen der Ausnehmung und dem Wärmeübertrager oder dem Wärmeübertragermodul herzustellen. Das Halteteil kann damit ein einfacher Weise sicher und zuverlässig an dem Wärmeübertrager befestigt werden.

Ein Auflagemaul umfasst wenigstens zwei Wandungen, die in einem Winkel von weniger als 180° zueinander ausgerichtet sind, um eine Auflageschale oder einen Teil einer Auflageschale zu bilden. Die Wandungen des Auflagemaules sind eben und/oder gekrümmt.

In einer weiteren Ausgestaltung ist der wenigstens eine biegbare Haltearm oder Halteclip um wenigstens 90° biegbar und/oder der Wärmeübertrager oder das Wärmeübertragermodul ist von dem biegbaren Haltearm oder Halteclip umgreifbar. Ein Umgreifen des Wärmeübertragers, insbesondere des Sammelrohres, ermöglicht eine formschlüssige Verbindung zwischen dem Halteteil und dem Wärmeübertrager.

In einer Variante ist der wenigstens eine biegbare Haltearm oder Halteclip an dem übrigen Halteteil, vorzugsweise lösbar, fixierbar. Der Haltearm kann damit um den Wärmeübertrager, z. B. das Sammelrohr, gebogen und anschließend fixiert werden.

In einer weiteren Ausgestaltung ist der Haltearm oder das Halteclip mittels einer kraft- und/oder formschlüssigen Verbindung, insbesondere einer Rastverbindung, an dem übrigen Halteteil fixierbar.

Insbeondere ist von dem Haltearm oder Halteclip ein Rohr, insbesondere ein Sammelrohr, des Wärmeübertragers oder Wärmeübertragermoduls umgreifbar.

In einer zusätzlichen Ausführungsform ist von dem Haltearm und/oder dem Auflagemaul das Rohr vollständig umgreifbar. Das Rohr, z. B. Sammelrohr, kann damit besonders sicher formschlüssig gehalten werden.

In einer weiteren Ausgestaltung weist das Auflagemaul eine erste Seitenwandung zum Auflegen auf eine Vorderseite und eine zweite Seitenwandung zum Auflegen auf eine Rückseite des Wärmeübertragers oder Wärmeübertragermoduls auf.

In einer Variante weist das Auflagemaul eine Rückwandung zum Auflegen auf eine Seitenfläche des Wärmeübertragers oder des Wärmeübertragermoduls auf und/oder das Auflagemaul weist eine Zusatzwandung zum Auflegen auf eine Ober- oder Unterseite des Wärmeübertragers oder des Wärmeübertragermoduls auf.

In einer weiteren Ausgestaltung ist die erste und zweite Seitenwandung des Auflagemaules elastisch und mittels einer Verformung der ersten und zweiten Seitenwandung eine kraftschlüssigen Klemmverbindung zwischen der ersten und zweiten Seitenwandung und der Vorderseite und Rückseite des Wärmeübertragers oder des Wärmeübertragermoduls herstellbar. Bei der Montage des Halteteils können die Seitenwandungen verformt und somit eine kraftschlüssige Verbindung oder eine Presspassung zwischen den Seitenwandungen und dem Halteteil, insbesondere Sammelrohr, hergestellt werden.

Vorzugsweise besteht das Halteteil wenigstens teilweise aus, vorzugsweise thermoplastischen, Kunststoff. Das Halteteil ist damit in der Herstellung preiswert und kann beispielsweise mittels Spritzgießen hergestellt werden.

In einer weiteren Ausführugsform ist die wenigstens eine Einrichtung eine Lasche mit einer Laschenausnehmung, insbesondere Bohrung. In die Laschenausnehmung kann z. B. ein Bolzen oder eine Niete eingeführt werden, die mit der Karosserie verbunden sind.

Ein erfindungsgemäßes Kraftfahrzeug oder eine Kraftfahrzeugklimaanlage umfasst ein in dieser Anmeldung beschriebenes Halteteil.

Ein erfindungsgemäßes Verfahren zur Befestigung eines Wärmeübertragers oder eines Wärmeübertragermoduls an einer Karosserie eines Kraftfahrzeuges umfasst die Schritte: Auflegen wenigstens eines Auflagemaules wenigstens eines Halteteils an wenigstens einem Eckbereich des Wärmeübertragers oder des Wärmeübertragermoduls und Befestigen des wenigstens eines Halteteils an der Karosserie, wobei der Wärmeübertrager oder das Wärmeübertragermodul in eine Ausnehmung des Halteteils verformt wird, um ein formschlüssige Verbindung zwischen dem Halteteil und dem Wärmeübertrager oder dem Wärmeübertragermodul herzustellen und/oder wenigstens ein biegbarer Haltearm oder Halteclip des Halteteils um den Wärmeübertrager oder das Wärmeübertragermodul, z. B. ein Rohr, insbesondere ein Sammelrohr, gebogen wird zum Befestigen des Wärmeübertragers oder des Wärmeübertragermoduls an dem Halteteil und/oder das Auflagemaul verformt, insbesondere gedehnt, wird und mittels der elastischen Verformung, insbesondere Rückverformung, des Auflagemaules der Eckbereich kraftschlüssig in dem Auflagemaul eingeklemmt wird.

In einer Variante wird der wenigstens eine Haltearm an dem übrigen Halteteil, vorzugsweise lösbar, fixiert. Das andere Ende des Haltearmes ist vorzugsweise ständig an dem übrigen Halteteil fixiert, insbesondere dadurch, dass der Haltearm und das übrige Halteteil einteilig ausgebildet sind.

In einer zusätzlichen Ausgestaltung wird ein Werkzeug in die Ausnehmung des Halteteils eingeführt, das Werkzeug greift eine Komponente des Wärmeübertragers oder des Wärmeübertragermoduls und das Werkzeug wird aus der Ausnehmung des Halteteils ausgeführt während das Werkzeug die Komponente greift, so dass die Komponente in die Ausnehmung verformt, z. B. gebogen, wird.

Im Nachfolgenden werden vier Ausführungsbeispiele der Erfindung unter Bezugnahme auf die beigefügten Zeichnungen näher beschrieben. Es zeigt:
- Fig. 1: eine perspektivische Ansicht eines Wärmeübertragermoduls,
- Fig. 2: eine perspektivische Ansicht eines Halteteils und eines Teils des Wärmeübertragermoduis in einer ersten Ausführungsform,
- Fig. 3: eine perspektivische Ansicht des Halteteils und des Teils des Wärmeübertragermoduls in einer zweiten Ausführungsform,
- Fig. 4: eine perspektivische Ansicht des Halteteils und des Teils des Wärmeübertragermoduls in einer dritten Ausführungsform und
- Fig. 5: eine perspektivische Ansicht des Halteteils und des Teils des Wärmeübertragermoduls in einer vierten Ausführungsform.

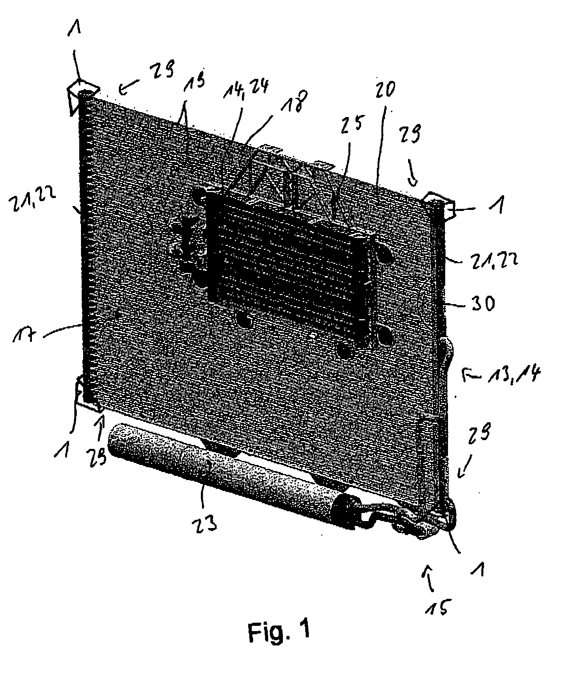

In Fig. 1 ist ein als Kondensator 13 ausgebildeter Wärmeübertrager 14 einer nicht dargestellten Kraftfahrzeugklimaanlage dargestellt. Die Kraftfahrzeugklimaanlage umfasst ferner einen Kältemittelverdampfer zum Kühlen der Luft, ein Gebläse zum Umwälzen der Luft, Leitungen für einen Kältemittelkreislauf und einen Verdichter (nicht dargestellt). Die nicht dargestellte Kraftfahrzeugklimaanlage dient dazu, die dem Innenraum des Kraftfahrzeuges zuzuführende Luft zu kühlen und/oder zu erwärmen.

An dem in Fig. 1 dargestellten Kondensator 13 ist mittels eines Befestigungsrahmens 25 ein als Ölkühler 24 ausgebildeter Wärmeübertrager 14 befestigt. Der Kondensator 13 umfasst zwei als Sammelrohre 22 ausgebildete Rohre 21 auf der linken und rechten Seite des Kondensators 13. Zwischen den beiden vertikal ausgerichteten Sammelrohren 22 sind horizontale Flachrohre 19 angeordnet. Die Flachrohre 19 münden in die Sammelrohre 22. Zwischen den Flachrohren 19 sind Kühlrippen 20 vorhanden. Die Kühlrippen 20 sind nur in Fig. 1 dargestellt. In einem Sammelbehälter 23 des Kondensators 13 ist hygroskopisches Material zur Trocknung des durch den Kondensator 13 strömenden Kältemittels der Kraftfahrzeugklimaanlage vorhanden.

Der Kondensator 13 wird mittel vier Halteteilen 1 (Fig. 1) je an einem Eckbereich 29 des Kondensators 13 bzw. Wärmeübertragers 14 an einer nicht dargestellten Karosserie des Kraftfahrzeuges befestigt. In Fig. 1 sind zwei Wärmeübertrager 14, d. h. der Kondensator 13 und der Ölkühler 24, abgebildet, so dass diese aufgrund der Verbindung mittels des Befestigungsrahmes 25 ein Wärmeübertragermodul 15 bilden.

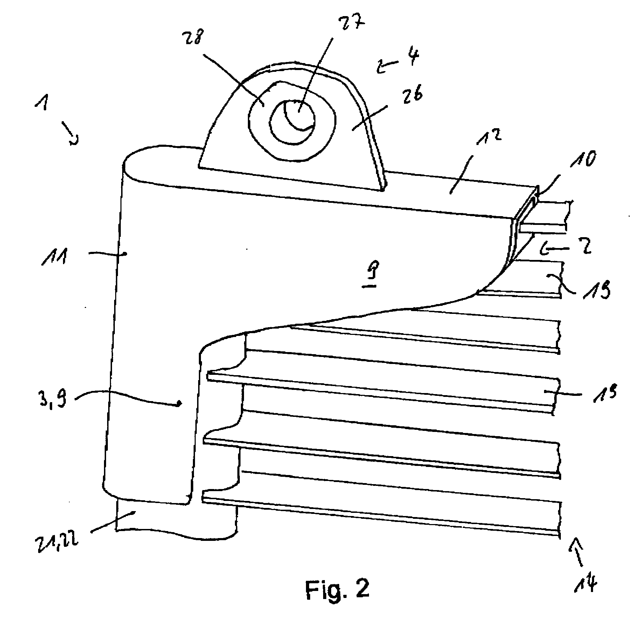

Das aus thermoplastischen Kunststoff bestehende Halteteil 1 weist eine erste, vordere Seitenwandung 9, eine zweite, hintere Seitenwandung 10, eine Rückwandung 11 und eine Zusatzwandung 12 auf, die ein Auflagemaul 2 bilden (Fig. 2 bis 5). Das Haltemaul 2 wird somit von den beiden parallelen Seitenwandungen 9, 10, der senkrecht zu den Seitenwandungen 9, 10 ausgebildeten Zusatzwandung 12 und der im Querschnitt halbkreisförmigen Rückwandung 11 begrenzt. Der Krümmungsradius der Rückwandung 11 entspricht im Wesentlichen dem Krümmungsradius des Sammelrohres 22, so dass die Rückwandung 11 im Wesentlichen ohne Spiel auf dem Sammelrohr 22 aufliegt (Fig. 2 bis 5). Die erste Seitenwandung 9 wird auf eine Vorderseite 17 des Kondensators 13, die zweite Seitenwandung 10 auf eine Rückseite des Kondensators 13, die Rückwandung 11 auf eine Seitenfläche 30 des Kondensators 13, die von dem Sammelrohr 22 gebildet wird, und die Zusatzwandung 12 auf eine Oberseite 18 bzw. eine Unterseite des Kondensators 13 aufgelegt, je nachdem ob das Halteteil 1 auf einen oberen oder unteren Eckbereich 29 aufgelegt wird. Der in Fig. 2 bis 5 nicht dargestellte rückseitige Teil des Halteteiles 1 ist analog zu dem vorderseitigen abgebildeten Teil des Halteteiles 1 ausgebildet.

An der Zusatzwandung 12 ist eine Lasche 26 mit einer Laschenausnehmung 27 ausgebildet (Fig. 2 bis 5). In die Laschenausnehmung 27 ist ein Gummilager 28 eingefügt. Die Lasche 26, Laschenausnehmung 27 und das Gummilager 28 sind somit Einrichtungen 4 zum Verbinden des Halteteils 1 mit der Karosserie des Kraftfahrzeuges (Fig. 2 bis 5). In die Laschenausnehmung 27 kann beispielsweise eine Schraube oder ein Bolzen eingefügt werden zum Befestigen des Halteteils 1 (nicht dargestellt).

Der Kondensator 13 als Wärmeübertrager 14 wird von dem Auflagemaul 2 des Halteteils 1 formschlüssig gehalten, wobei in zwei aufeinander senkrecht stehenden Richtungen keine formschlüssige Verbindung zwischen dem Auflagemaul 2 und dem Eckbereich 29 des Wärmeübertragers 14 besteht. Die erste Richtung ist in Richtung einer Längsachse des Sammelrohres 22 und die zweite Richtung in Richtung einer Längsachse der Flachrohre 19 ausgerichtet (Fig. 2 bis 5). Der Eckbereich 29 wird zur Ausbildung der formschlüssigen Verbindung in das Auflagemaul 2 eingeführt.

In den Fig. 2 bis 5 sind vier verschiedene Ausführungsformen für Mittel 3 zum zusätzlichen Verbinden des Halteteils 1 mit dem Wärmeübertrager 14 abgebildet.

In der in Fig. 2 dargestellten ersten Ausführungsform des Halteteils 1 sind die beiden Seitenwandungen 9, 10 und damit das Auflagemaul 2 elastisch ausgebildet. Die im Querschnitt gekrümmte und halbkreisförmige Rückwandung 11 setzt sich um das Sammelrohr 22 herum als Seitenwandungen 9, 10 fort, so dass die Rückwandung 11 und die beiden gekrümmten Teile der Seitenwandungen 9, 10 das Sammelrohr 22 um mehr als 180° umgreifen. Die ebenen Teile der Seitenwandung 9, 10 liegen nicht auf dem Sammelrohr 22, sondern auf den Flachrohren 19 auf. Ferner ist der Innenradius der beiden gekrümmten Teile der Seitenwandungen 9, 10 kleiner als der Außenradius der beiden Sammelrohre 22 in einem nicht aufgesteckten Zustand des Halteteiles 1 auf den Eckbereich 29. Zum Verbinden des Auflagemaules 2 mit dem Eckbereich 29 wird das Halteteil 1 auf den Eckbereich 29 aufgeschoben und dabei die beiden gekrümmten Teile der Seitenwandungen 9, 10 elastisch gedehnt, so dass sich eine Presspassung bzw. eine Vorspannung zwischen den beiden gekrümmten Teilen der Seitenwandungen 9, 10 als Mittel 3 zum zusätzlichen Verbinden des Halteteils 1 mit dem Wärmeübertrager 14 ergibt. Das Auflagemaul 2 ist damit zusätzlich kraftschlüssig mit dem Eckbereich 29 verbunden.

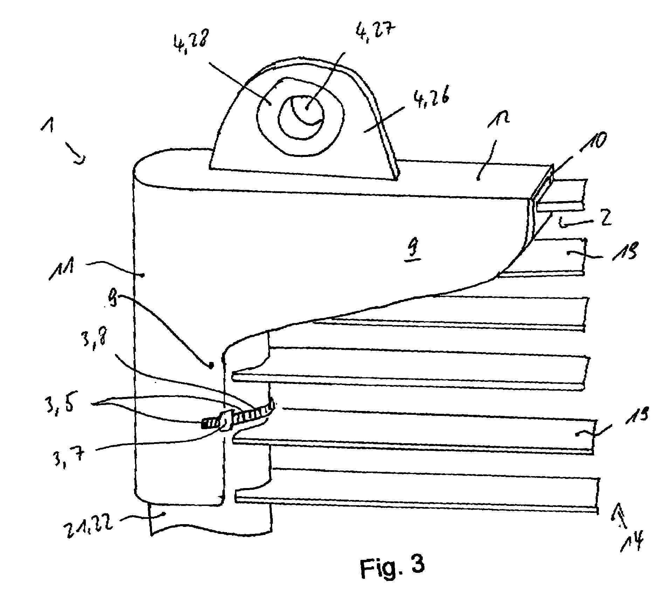

In der zweiten Ausführungsform des Halteteils 1 (Fig. 3) ist an der hinteren Seitenwandung 10 ein biegbarer Haltearm 5 mit Rastzacken 8 und an der vorderen Seitenwand 9 ein Arretierverschluss 7 vorhanden. Zum Befestigen des Halteteils 1 an dem Eckebereich 29 wird zunächst das Auflagemaul 2 auf den Eckbereich 29 aufgeschoben bzw. aufgesteckt. Anschließend wird der Haltearm 5 von der hinteren Seitenwand 10 zu dem Arretierverschluss 7 gebogen und ein Ende des Haltearmes 5 in den Arretierverschluss 7 eingeschoben. In dem Arretierverschluss 7 wird mittels der Rastzacken 8 der Haltearm 5 an dem Arretierschluss 7 eingerastet. Der Arretierverschluss 7 ist dabei dahingehend ausgebildet, dass der Haltearm 5 nur in den Arretierverschluss 7 eingeschoben, nicht jedoch aus dem Arretierverschluss 7 ausgeschoben werden kann, so dass ein unlösbare Verbindung zwischen dem Arretierverschluss 7 und dem Haltearm 5 entsteht. Der Haltearm 5 wird soweit in den Arretierverschluss 7 eingeschoben, bis der Haltearm 5 unter Vorspannung das Sammelrohr 22 zusammen mit der Rückwandung 11 und gekrümmten Teilen der Seitenwandungen 9, 10 vollständig umgreift. Vorzugsweise ist auch der Haltearm 5 elastisch, so dass sich der der Haltearm 5 dehnt bei einer Zugkraft in dem Haltearm 5. Außerdem ist es auch möglich, dass die Rastververbindung zwischen dem Haltearm 5 und dem Arretierverschluss 7 lösbar ist, indem an dem Arretierverschluss 7 mittels einer Taste die Rastverbindung gelöst werden kann (nicht dargestellt). Der Haltearm 5 und der Arretierverschluss 7 ist somit ein Mittel 3 zum zusätzlichen Verbinden des Halteteils 1 mit dem Wärmeübertrager 14. Das Halteteil 1 kann somit den Eckbereich 29 in sämtlichen Richtungen befestigen, weil mit dem Haltearm 5 auch die von dem Auflagemaul 2 nicht fixierten beiden Richtungen fixiert werden können. Insbesondere in sämtlichen horizontale Richtungen ist der Wärmeübertrager 14 von dem Auflagemaul 2 und dem Haltearm 5 fixiert.

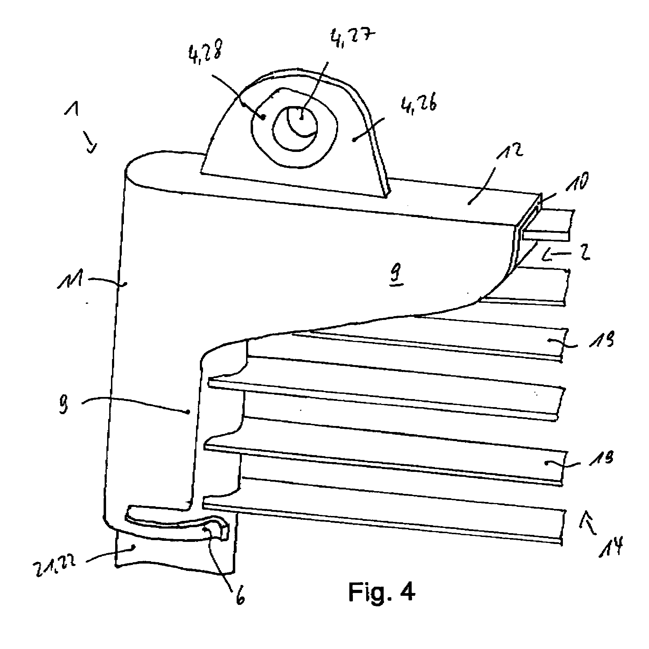

In Fig. 4 ist eine dritte Ausführungsform des Halteteils 1 dargestellt. Als Mittel 3 zum zusätzlichen Verbinden des Halteteils 1 mit dem Wärmeübertrager 14 sind zwei Halteclips 6 an der Rückwandung 11 ausgebildet. In Fig. 4 ist lediglich das vordere Halteclip 6 abgebildet und das hintere Halteclip 6 entspricht in analoger Weise dem vorderen Halteclip 6. Die verformbaren und elastischen Halteclips 6 weisen im nicht montierten Zustand einen inneren Krümmungsradius auf, der kleiner ist als der äußere Krümmungsradius des Sammelrohres 22. Die Halteclips 6 sind gebogen und setzen die gekrümmte Form der Rückwandung 11 fort zum teilweisen Umgreifen des Sammelrohres 22. Die Halteclips 6 werden bei der Montage der Halteteils 1 auf den Eckbereich 29 des Wärmeübertragers 14 nach außen gebogen, um das Auflagemaul 2 auf den Eckbereich 29 aufschieben zu können. In der in Fig. 4 dargestellten Endstellung des Halteteils 1 liegen somit die beiden Halteclips 6 unter Vorspannung auf dem Sammelrohr 22 auf und ermöglichen somit ein form- und kraftschlüssiges zusätzlichen Verbinden des Halteteils 1 mit dem Eckbereich 29.

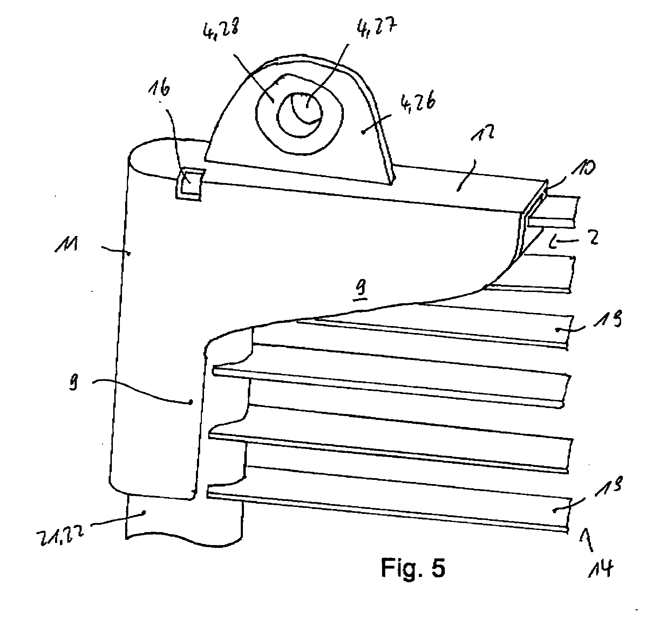

In der vierten Ausführungsform des Halteteiles 1 (Fig. 5) ist im Eckbereich an der vorderen Seitenwandung 9 und der Zusatzwandung 12 eine Ausnehmung 16 vorhanden. Bei der Montage des Halteteiles 1 wird dieses zunächst in die in Fig. 5 abgebildete Endstellung auf den Eckbereich 29 aufgeschoben bzw. montiert. Anschließend wird ein Werkzeug in die Ausnehmung 16 eingeführt und von dem Werkzeug ein Komponente oder ein Teil des Sammelrohres 22 in die Ausnehmung 16 hinein gebogen, so dass eine formschlüssige Verbindung zwischen dem Halteteil 1 und dem Wärmeübertrager 14 entsteht. Der Eckbereich 29 ist somit in sämtlichen Richtungen in dem Auflagemaul 2 fixiert.

Die Einzelheiten der verschiedenen Ausführungsbeispiele können miteinander kombiniert werden, sofern nichts Gegenteiliges erwähnt wird.

Insgesamt betrachtet sind mit dem erfindungsgemäßen Halteteil 1 zur Befestigung eines Wärmeübertragers 4 oder eines Wärmeübertragermoduls 5 an einer Karosserie eines Kraftfahrzeuges, erhebliche Vorteile verbunden. Anstelle aufwendiger und teuerer Halteteile 1 aus Metall, insbesondere Aluminium, können Halteteile 1 aus preiswertem Kunststoff verwendet werden, die eine zuverlässige und sichere Befestigung des Wärmeübertragers 4 oder des Wärmeübertragermoduls 5 ermöglichen.

### Bezugszeichenliste

- 1: Halteteil
- 2: Auflagemaul
- 3: Mittel zum zusätzlichen Verbinden
- 4: Einrichtung zum Verbinden des Halteteils einer Karosserie
- 5: Haltearm
- 6: Halteclip
- 7: Arretierverschluss
- 8: Rastzacken
- 9: Erste Seitenwandung
- 10: Zweite Seitenwandung
- 11: Rückwandung
- 12: Zusatzwandung
- 13: Kondensator
- 14: Wärmeübertrager
- 15: Wärmeübertragermodul
- 16: Ausnehmung
- 17: Vorderseite
- 18: Oberseite
- 19: Flachrohr
- 20: Kühlrippe
- 21: Rohr
- 22: Sammelrohr
- 23: Sammelbehälter
- 24: Ölkühler
- 25: Befestigungsrahmen für Ölkühler
- 26: Lasche
- 27: Laschenausnehmung
- 28: Gummilager
- 29: Eckbereich
- 30: Seitenfläche

## Patentansprüche

1. Halteteil (1) zur Befestigung eines Wärmeübertragers (14) oder eines Wärmeübertragermoduls (15) an einer Karosserie eines Kraftfahrzeuges, umfassend
- ein Auflagemaul (2) zum Auflegen auf einen Eckbereich (29) des Wärmeübertragers (14) oder Wärmeübertragermoduls (15) und formschlüssigen Verbinden des Halteteils (1) mit dem Wärmeübertrager (14) oder Wärmeübertragermodul (15), wobei vorzugsweise von dem Auflagemaul (2) in wenigstens einer Richtung keine formschlüssige Verbindung zwischen dem Halteteil (1) und dem Eckbereich (29) herstellbar ist,
- wenigstens ein Mittel (3) zum zusätzlichen Verbinden des Halteteils (1) mit dem Eckbereich (29) des Wärmeübertragers (14) oder des Wärmeübertragermoduls (15),
- wenigstens eine Einrichtung (4) zum Verbinden des Halteteils (1) mit der Karosserie des Kraftfahrzeuges,
**dadurch gekennzeichnet, dass**
das wenigstens eine Mittel (3) wenigstens ein biegbarer Haltearm (5) oder Halteclip (6) zum form- und/oder kraftschlüssigen Befestigen des Wärmeübertragers (14) oder des Wärmeübertragermoduls (15) an dem Halteteil (1) ist, so dass mittels eines Biegens des wenigstens einen Haltearmes (5) oder Halteclips (6) der Wärmeübertrager (14) oder das Wärmeübertragermodul (15) an dem Halteteil (1) befestigbar ist
und/oder
das Auflagemaul (2) elastisch ist und mittels einer Verformung des Auflagemaules (2) eine kraftschlüssigen Klemmverbindung zwischen dem Auflagemaul (2) und dem Eckbereich (29) herstellbar ist
und/oder
das Halteteil (1), insbesondere das Auflagemaul (2), mit einer Ausnehmung (16) versehen ist, um mittels einer Verformung des Wärmeübertragers (14) oder des Wärmeübertragermoduls (15) in die Ausnehmung (16) eine form- und/oder kraftschlüssige Verbindung zwischen der Ausnehmung (16) und dem Wärmeübertrager (14) oder dem Wärmeübertragermodul (15) herzustellen.

2. Halteteil nach Anspruch 1, **dadurch gekennzeichnet, dass** der wenigstens eine biegbare Haltearm (5) oder Halteclip (6) um wenigstens 90° biegbar ist und/oder der Wärmeübertrager (14) oder das Wärmeübertragermodul (15) von dem biegbaren Haltearm (5) oder Halteclip (6) umgreifbar ist.

3. Halteteil nach Anspruch 1 oder 2, **dadurch gekennzeichnet, dass** der wenigstens eine biegbare Haltearm (5) oder Halteclip (6) an dem übrigen Halteteil (1), vorzugsweise lösbar, fixierbar ist.

4. Halteteil nach Anspruch 3, **dadurch gekennzeichnet, dass** der Haltearm (5) oder das Halteclip (6) mittels einer kraft- und/oder formschlüssigen Verbindung, insbesondere einer Rastverbindung, an dem übrigen Halteteil (1) fixierbar ist.

5. Halteteil nach einem oder mehreren der vorhergehenden Ansprüchen, **dadurch gekennzeichnet, dass** von dem Haltearm (5) oder Halteclip (6) ein Rohr (21), insbesondere ein Sammelrohr (22), des Wärmeübertragers (14) oder Wärmeübertragermoduls (15) umgreifbar ist.

6. Halteteil nach Anspruch 5, **dadurch gekennzeichnet, dass** von dem Haltearm (5) und/oder dem Auflagemaul (2) das Rohr (21) vollständig umgreifbar ist.

7. Halteteil nach einem oder mehreren der vorhergehenden Ansprüchen, **dadurch gekennzeichnet, dass** das Auflagemaul (2) eine erste Seitenwandung (9) zum Auflegen auf eine Vorderseite (17) des Wärmeübertragers (14) oder Wärmeübertragermoduls (15) und eine zweite Seitenwandung (10) zum Auflegen auf eine Rückseite des Wärmeübertragers (14) oder Wärmeübertragermoduls (15) aufweist.

8. Halteteil nach einem oder mehreren der vorhergehenden Ansprüchen, **dadurch gekennzeichnet, dass** das Auflagemaul (2) eine Rückwandung (11) zum Auflegen auf eine Seitenfläche (30) des Wärmeübertragers (14) oder des Wärmeübertragermoduls (15) aufweist und/oder das Auflagemaul (2) eine Zusatzwandung (12) zum Auflegen auf eine Ober- oder Unterseite (18) des Wärmeübertragers (14) oder des Wärmeübertragermoduls (15) aufweist.

9. Halteteil nach Anspruch 7 oder 8, **dadurch gekennzeichnet, dass** die erste und zweite Seitenwandung (9, 10) des Auflagemaules (2) elastisch ist und mittels einer Verformung der ersten und zweiten Seitenwandung (9, 10) eine kraftschlüssigen Klemmverbindung zwischen der ersten und zweiten Seitenwandung (9, 10) und der Vorderseite (17) und Rückseite des Wärmeübertragers (14) oder des Wärmeübertragermoduls (15) herstellbar ist.

10. Halteteil nach einem oder mehreren der vorhergehenden Ansprüchen, **dadurch gekennzeichnet, dass** das Halteteil (1) wenigstens teilweise aus, vorzugsweise thermoplastischen, Kunststoff besteht.

11. Halteteil nach einem oder mehreren der vorhergehenden Ansprüchen, **dadurch gekennzeichnet, dass** die wenigstens eine Einrichtung (4) eine Lasche (26) mit einer Laschenausnehmung (27), insbesondere Bohrung, ist.

12. Kraftfahrzeug oder Kraftfahrzeugklimaanlage, **dadurch gekennzeichnet, dass** das Kraftfahrzeug oder die Kraftfahrzeugklimaanlage eine Halteteil (1) gemäß einem oder mehreren der vorhergehenden Ansprüche umfasst.

13. Verfahren zur Befestigung eines Wärmeübertragers (14) oder eines Wärmeübertragermoduls (15) an einer Karosserie eines Kraftfahrzeuges mit den Schritten:
- Auflegen wenigstens eines Auflagemaules (2) wenigstens eines Halteteils (1) an wenigstens einem Eckbereich (29) des Wärmeübertragers (14) oder des Wärmeübertragermoduls (15) und
- Befestigen des wenigstens eines Halteteils (1) an der Karosserie,
**dadurch gekennzeichnet, dass**
der Wärmeübertrager (14) oder das Wärmeübertragermodul (15) in eine Ausnehmung (16) des Halteteils (1) verformt wird, um ein formschlüssige Verbindung zwischen dem Halteteil (1) und dem Wärmeübertrager (14) oder dem Wärmeübertragermodul (15) herzustellen
und/oder
wenigstens ein biegbarer Haltearm (5) oder Halteclip (6) des Halteteils (1) um den Wärmeübertrager (14) oder das Wärmeübertragermodul (15), z. B. ein Rohr (21), insbesondere ein Sammelrohr (22), gebogen wird zum Befestigen des Wärmeübertragers (14) oder des Wärmeübertragermoduls (15) an dem Halteteil (1)
und/oder
das Auflagemaul (2) verformt, insbesondere gedehnt, wird und mittels der elastischen Verformung, insbesondere Rückverformung, des Auflagemaules (2) der Eckbereich (29) kraftschlüssig in dem Auflagemaul (2) eingeklemmt wird.

14. Verfahren nach Anspruch 13, **dadurch gekennzeichnet, dass** der wenigstens eine Haltearm (5) an dem übrigen Halteteil (1), vorzugsweise lösbar, fixiert wird.

15. Verfahren nach Anspruch 13 oder 14, **dadurch gekennzeichnet, dass** ein Werkzeug in die Ausnehmung (16) des Halteteils (1) eingeführt, das Werkzeug eine Komponente des Wärmeübertragers (14) oder des Wärmeübertragermoduls (15) greift und das Werkzeug aus der Ausnehmung (16) des Halteteils (1) ausgeführt wird während das Werkzeug die Komponente greift, so dass die Komponente in die Ausnehmung (16) verformt, z. B. gebogen, wird.
